# NEUE EUROPÄISCHE PATENTSCHRIFT

(11) **EP 3 163 070 B2**
(45) Veröffentlichungstag und Bekanntmachung des Hinweises auf die Entscheidung über den Einspruch: **14.12.2022**
(45) Hinweis auf die Patenterteilung: 19.12.2018
(21) Anmeldenummer: 15192410.7
(22) Anmeldetag: 30.10.2015
(51) Int. Cl.: F03D 1/00, F03D 80/00

(54) **WINDENERGIEANLAGE MIT EINEM SCHLEIFRINGÜBERTRAGER**
WIND TURBINE WITH A SLIP RING TRANSMITTER
ÉOLIENNE DOTEE D'UN ELEMENT DE TRANSMISSION A BAGUE COLLECTRICE

(43) Veröffentlichungstag der Anmeldung: 03.05.2017
(73) Patentinhaber: Nordex Energy GmbH, 22419 Hamburg (DE)
(72) Erfinder: Altrock, Olaf, 23556 Lübeck (DE); Babbel, Stephan, 18147 Rostock (DE); Georg, Torsten, 47918 Tönisvorst (DE)
(74) Vertreter: Hauck Patentanwaltspartnerschaft mbB

(56) Entgegenhaltungen:
- EP-A2- 2 336 996

## Beschreibung

Die vorliegende Erfindung betrifft eine Windenergieanlage mit einem Schleifringübertrager, der zwischen einer Rotornabe und einem Maschinenhaus zur Übertragung von Daten mit einem Datenprotokoll angeordnet ist.

In der Rotornabe einer Windenergieanlage befinden sich verschiedene Systeme, wie beispielsweise die Pitchsysteme für die Rotorblätter, die von einer zentralen Betriebsführung der Windenergieanlage gesteuert werden. Zu deren Steuerung, aber auch um Signale der Pitchsysteme an die Betriebsführung zu melden, ist eine Datenübertragung zwischen der drehenden Rotornabe und dem stehenden Maschinenhaus erforderlich.

Neben der Übertragung mit Schleifringen ist auch eine berührungslose Übertragung von Daten bei einer Windenergieanlage bekannt. Hier beschreibt EP 2 336 996 A2 eine berührungslose Infrarotdatenübertragung für eine Windenergieanlage.

Aus DE 100 31 005 A1 ist eine Anordnung zur Übertragung elektrischer Signale, elektrischer Energie bzw. Medien über kurze Strecken zwischen gegeneinander beweglichen Einheiten bekannt. Die Übertragungsanordnung besitzt einen mechanischen Schleifringübertrager, bestehend aus einem Rotor und einem Kohlenhalter mit zugehörigen Kohlen zum Abgriff der Signale. Dem Kohlenhalter bzw. Bürstenblock ist eine Diagnoseeinheit zugeordnet, welche den Zustand der Kohlen ermittelt und an eine zentrale Steuereinheit signalisiert. Weiterhin besitzt die Diagnoseeinheit eine optische sowie eine akustische Anzeigevorrichtung für den Kohlezustand.

Aus EP 2 419 629 B1 ist eine Windenergieanlage bekannt geworden, die einen konzentrisch zu einem Rotorlager angeordneten Drehübertrager zur Energieversorgung von in der Rotornabe angeordneten elektrischen Verbrauchern und ein mit der Gondel verbundenes Primärteil des Drehübertragers aufweist. Die Rotornabe besitzt ein mit diesem drehbar verbundenes Sekundärteil, wobei mit Hilfe von zwei Frequenzumrichtern Wechselspannungen zwischen Primär- und Sekundärteil übertragen werden.

Aus WO 2014/005588 A1 ist eine Windenergieanlage bekannt, bei der zur elektrischen Leistungsübertragung ein galvanischer Kontakt zwischen einem drehenden und einem stehenden Bauteil hergestellt werden kann. In einer Variante hierzu werden außenliegende elektrische Kontakte in Verbindung miteinander gebracht.

Aus DE 10 2008 028 017 A1 ist ein Verfahren und eine Diagnoseanlage zur Überwachung eines Schleifringsystems an Elektromaschinen bekannt. Hierbei werden Temperaturen von Kohlebürsten und/oder fließende Ströme ermittelt und zu Diagnosezwecken ausgewertet.

Aus EP 2 843 778 A1 ist eine weitere Schleifringeinheit mit einer Zustandsüberwachung bekannt.

Aus US 8,384,235 B2 ist eine Windenergieanlage bekannt, bei der Signale einer rotornabenseitigen Signalverarbeitungseinheit mit Signalen einer gondelseitigen Signalverarbeitungseinheit über einen Schleifring ausgetauscht werden. Für die Übertragung werden die informationstragenden Signale auf ein niederfrequentes Wechselspannungssignal aufmoduliert.

Bei der Übertragung von elektrischen Signalen und elektrischer Leistung zwischen einer drehenden Rotornabe und einem feststehenden Maschinenhaus haben sich bei Windenergieanlagen Schleifringübertrager bewährt. Für die Übertragung der elektrischen Signale kann auf einen galvanischen, optischen, induktiven oder kapazitiven Übertragungsweg zurückgegriffen werden. Der Nachteil bei dem Einsatz von elektrischen Schleifringübertragern ist, dass bei der Datenübertragung häufig Fehler auftreten.

Der Erfindung liegt die Aufgabe zugrunde, eine Windenergieanlage mit einem Schleifringübertrager zwischen einer Rotornabe und einem Maschinenhaus zur Verfügung zu stellen, die bei der Übertragung von Daten mit einem Datenprotokoll wenig störanfällig ist.

Erfindungsgemäß wird die Aufgabe durch eine Windenergieanlage mit den Merkmalen aus Anspruch 1 gelöst. Vorteilhafte Ausgestaltungen bilden den Gegenstand der Unteransprüche.

Die erfindungsgemäße Windenergieanlage ist mit einem Schleifringübertrager zwischen einer Rotornabe und einem Maschinenhaus zur Übertragung von Daten mit einem Datenprotokoll ausgestattet. Der Schleifringübertrager besitzt sendeseitig eine Signalverstärkungseinrichtung und empfangsseitig eine Signalauswerteeinrichtung. Signale werden dabei von der Signalverstärkungseinrichtung zu der Signalauswerteeinrichtung über den Schleifringübertrager übertragen. Die Signalverstärkungseinrichtung verstärkt Spannungswerte von Signalen für eine Übertragung. Die Signalauswerteeinrichtung setzt die empfangenen Signale auf einen dem Datenprotokoll entsprechenden Wert zurück. Die Erfindung beruht auf der Erkenntnis, dass viele der bei der Datenübertragung auftretenden Probleme kein Problem der verwendeten Schirmung oder Kabelführung oder ein sonstiges Thema der elektromagnetischen Verträglichkeit sind. Vielmehr sind es lokal schwankende Übergangswiderstände, die die Datenübertragung erschweren. Durch die Verstärkung der Spannungswerte vor der Übertragung können diese lokalen Schwankungen ausgeglichen werden.

In einer bevorzugten Weiterbildung ist als Datenprotokoll ein Feldbus-Protokoll, insbesondere ein Interbus-Protokoll vorgesehen, wobei Spannungsdifferenzen ausgewertet werden. Feldbus-Protokolle und ihre elektrischen Eigenschaften sind hinlänglich bekannt. Bei der erfindungsgemäßen Windenergieanlage werden nicht die absoluten Spannungswerte der anliegenden Signale ausgewertet, sondern die jeweiligen Spannungsdifferenzen. Die Spannungsdifferenzen können dabei zwischen zwei an Eingangsanschlüssen anliegenden Spannungen bestehen oder zwischen zwei Spannungen auf unterschiedlichen Kanälen des Schleifringübertragers. Dies bedeutet, dass bei einer Verstärkung der Signale nicht unbedingt die Spannungswerte absolut verstärkt werden, sondern die Differenz zwischen den Spannungswerten wird verstärkt. Insbesondere liegen die verstärkten Spannungsdifferenzen innerhalb eines Intervalls mit einem minimalen Spannungswert und einem maximalen Spannungswert, wobei der minimale und der maximale Spannungswert bevorzugt entgegengesetzte Polaritäten aufweisen. Eine solche Änderung der Polarität bei den zu übertragenden Signalen kann beispielsweise für die Übertragung der Daten auch dann eingesetzt werden, wenn das Datenprotokoll eine solche entgegengesetzte Polarität nicht vorsieht.

In einer bevorzugten Ausgestaltung setzt die Signalauswerteeinrichtung anliegende Signale in die durch das Datenprotokoll vorgegebenen Intervalle zurück. Veränderungen in den anliegenden Signalen, wie sie sich beispielsweise aus schwankenden ohmschen Übergangswiderständen ergeben, können bei dieser Umsetzung ausgeglichen werden.

Hierbei kann das Datenprotokoll ein Intervall mit einem minimalen und einem maximalen Spannungswert vorsehen, wobei diese Werte die gleiche Polarität aufweisen.

Erfindungsgemäß wertet die Signalauswerteeinrichtung die Größe der Spannungsdifferenzen aus und zeigt bei einer Spannungsdifferenz unterhalb einer vorbestimmten Minimaldifferenz eine defekte Übertragungsstrecke des Schleifringübertragers an. Bei der Auswertung der Spannungsdifferenzen kann die Signalauswerteeinrichtung auch auf zeitliche Mittelwerte abstellen, um beispielsweise lokal auftretende Spannungsänderungen zu vermeiden.

In einer bevorzugten Ausgestaltung ist eine erste Baugruppe vorgesehen, die eine Signalverstärkungseinrichtung und eine Signalauswerteeinrichtung aufweist. Entsprechend ist zu der ersten Baugruppe eine korrespondierende zweite Baugruppe vorgesehen, die ebenfalls eine Signalverstärkungseinrichtung und eine Signalauswerteeinrichtung aufweist. Bevorzugt ist die Signalverstärkungseinrichtung der ersten Baugruppe in Verbindung mit der Signalauswerteeinrichtung der zweiten Baugruppe, ebenso wie die Signalauswerteeinrichtung der ersten Baugruppe in Verbindung mit der Signalverstärkungseinrichtung der zweiten Baugruppe steht. Durch das Konzept der beiden Baugruppen, die jeweils eine Signalverstärkungseinrichtung und eine Signalauswerteeinrichtung besitzen, ist mit einfachen Mitteln eine bidirektionale Kommunikation möglich.

Ein bevorzugtes Ausführungsbeispiel der Erfindung wird nachfolgend an einem Ausführungsbeispiel näher erläutert. Es zeigen:
- Fig. 1: in einer schematischen Ansicht eine Windenergieanlage mit einem Turm, einem Maschinenhaus und einem Rotor und
- Fig. 2: in einer schematischen Ansicht einen Schleifringübertrager.

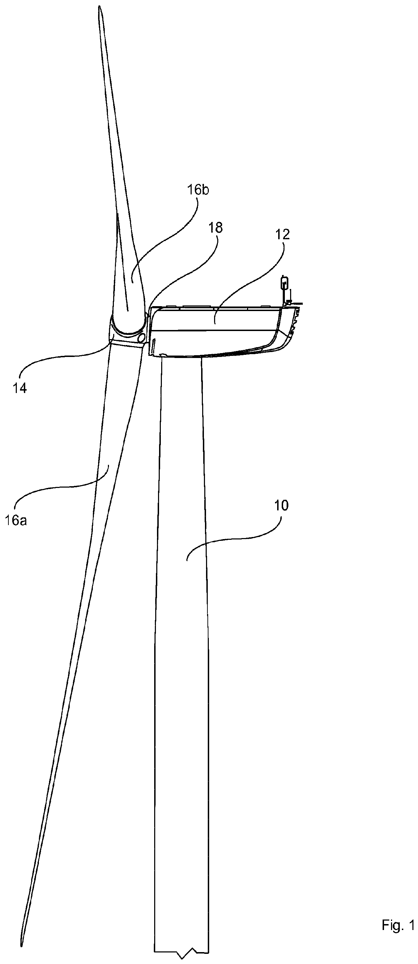

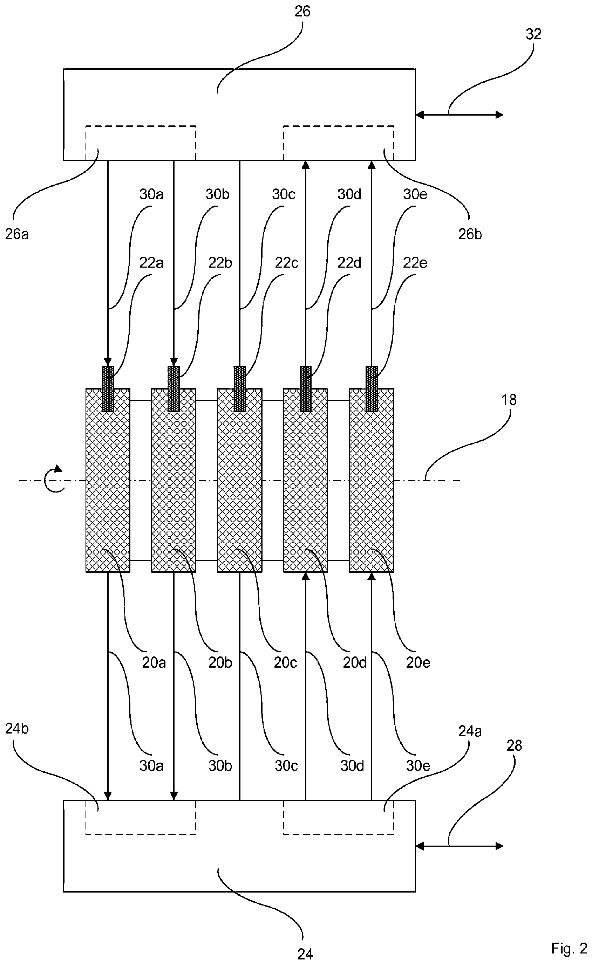

Fig. 1 zeigt einen Turm 10 einer Windenergieanlage, auf dem ein Maschinenhaus 12 angeordnet ist. Das Maschinenhaus 12 ist um die Längsachse des Turms 10 mit einer Drehverbindung drehbar gelagert und kann beispielsweise über einen Azimutantrieb zum Wind ausgerichtet werden. Das Maschinenhaus 12 trägt eine Rotornabe 14, an der drei Rotorblätter 16 angeordnet sind. Von den Rotorblättern 16 sind die Rotorblätter 16a und 16b in der Ansicht von der Seite dargestellt. Die Rotornabe 14 ist auf einer Rotorwelle 18 gelagert. Die Rotorwelle 18 ist drehbar in dem Maschinenhaus 12 gelagert, um einen Generator in diesem anzutreiben. Für eine Pitchsteuerung oder andere in der Rotornabe vorgesehene Steuereinrichtungen, wie beispielsweise eine Enteisungseinrichtung, müssen Daten von dem Maschinenhaus 12 in die drehbare Rotornabe 14 übertragen werden. Hierzu trägt die Rotorwelle 18 einen Schleifringübertrager. Das Prinzip eines Schleifringübertragers ist in Fig. 2 dargestellt. In Fig. 2 sind beispielhaft fünf gegeneinander elektrisch isolierte Schleifringe 20a, 20b, 20c, 20d, 20e dargestellt, die sich mit der Rotorwelle 18 drehen. Es gibt Schleifringübertrager mit mehr als fünf Schleifringen. In mechanischem Kontakt mit den Schleifringen 20a, 20b, 20c, 20d, 20e stehen Bürsten 22a, 22b, 22c, 22d, 22e, über die Spannungssignale 30a, 30b, 30c, 30d, 30e an den Schleifringen 20a, 20b, 20c, 20d, 20e abgegriffen oder an die Schleifringe 30a, 30b, 30c, 30d, 30e angelegt werden. Bekannt sind auch Schleifringübertrager, bei denen Einzeldrähte, Kohlebürsten, Drahtbüschel oder Kontaktbleche die Spannungssignale an den Schleifringen abgreifen oder diese an die Schleifringe anlegen. Eine Signalverstärkungseinrichtung 24a verstärkt die über die Interbus-Datenleitung 28 anliegenden Spannungssignale und legt diese als verstärkte Spannungssignale 30d, 30e an die Schleifringe 20d, 20e an. Das für die Signalübertragung benötigte gemeinsame Bezugspotenzial GND 30c wird über den Schleifring 20c und die Bürste 22c von einer ersten Baugruppe 24 an eine zweite Baugruppe 26 weitergeleitet. Die erste Baugruppe 24 weist eine Signalverstärkungseinrichtung 24a und eine Signalauswerteseinrichtung 24b, die zweite Baugruppe 26 weist eine Signalverstärkungseinrichtung 26a und eine Signalauswerteeinrichtung 26b auf. Die an den Bürsten 22d, 22e abgegriffenen verstärkten Spannungssignale 30d, 30e werden an eine Signalauswerteeinrichtung 26b weitergeleitet, wobei diese die verstärkten Spannungssignale 30d, 30e wieder in die durch das Interbus-Datenprotokoll vorgegebenen Spannungsbereiche umsetzt und als Spannungssignale an die Interbus-Datenleitung 32 ausgibt. In dem dargestellten Ausführungsbeispiel drehen die Schleifringe 20a, 20b, 20c, 20d, 20e mit der Rotorwelle 18 und die Bürsten 22a, 22b, 22c, 22d, 22e stehen fest mit dem Maschinenhaus 12 in Verbindung.

In entgegengesetzter Signalflussrichtung verstärkt eine Signalverstärkungseinrichtung 26a die über die Interbus-Datenleitung 32 anliegenden Spannungssignale und legt diese als verstärkte Spannungssignale 30a, 30b über die Bürsten 22a, 22b an die Schleifringe 20a, 20b an. Das für die Signalübertragung benötigte gemeinsame Bezugspotenzial GND 30c wird über die Bürste 22c und den Schleifring 20c von der Baugruppe 26 an die Baugruppe 24 weitergeleitet. Die an den Schleifringen 20a, 20b anliegenden verstärkten Spannungssignale 30a, 30b werden an eine Signalauswerteeinrichtung 24b weitergeleitet, wobei diese die verstärkten Spannungssignale 30a, 30b wieder in die durch das Interbus-Datenprotokoll vorgegebenen Spannungsbereiche umsetzt und als Spannungssignale an die Interbus-Datenleitung 28 ausgibt.

Die Datenübertragung arbeitet mit Differenzpegeln, wobei stets eine Differenz zwischen zwei Spannungssignalen ausgewertet wird. Das Interbus-Protokoll sieht beispielsweise vor, dass minimale Differenzpegel zwischen jeweils zwei Interbus-Leitungen im Betrag überschritten werden müssen, damit eine Eingangsstufe in einen anderen logischen Zustand wechselt. Offene Eingänge, denen kein definierter Zustand zugeordnet ist, sind über elektrische Widerstände so geschaltet, dass sie zuverlässig in einen definierten logischen Zustand wechseln. Im normalen Interbus verwendet ein Sender in der Regel nur positive Pegel mit Spannungswerten von 0 V und 5 V.

Die Aufgabe der Signalverstärkungseinrichtung 24a, 26a besteht darin, bei einem normalen Interbus-Sender die Höhe der Spannungssignale zu bestimmen. Mit dem so bestimmten logischen Signal werden zwei Verstärker angesteuert, die eine höhere Ausgangsspannung an den Schleifringübertrager geben als der normale Interbus-Sender. Dies bedeutet auch, dass mögliche negative Eingangsspannungsbereiche ausgenutzt werden. So können beispielsweise die verstärkten Spannungssignale bei +12 V bis -10 V liegen.

Die Signalauswerteeinrichtung 24b, 26b wertet die über die Bürsten 22a, 22b, 22c, 22d, 22e aufgenommenen Spannungssignale aus und setzt diese wieder in die durch das Interbus-Datenprotokoll vorgegebenen Spannungsbereiche um. Das in Fig. 2 gezeigte Ausführungsbeispiel zeigt eine Kommunikationsrichtung, bei der Datensignale über den Schleifringübertrager zu den beispielsweise feststehenden Bürsten 22a, 22b, 22c, 22d, 22e fließen.

## Patentansprüche

1. Windenergieanlage mit einem Schleifringübertrager zwischen einer Rotornabe (14) und einem Maschinenhaus (12) zur Übertragung von elektrischen Signalen mit einem Datenprotokoll,
**dadurch gekennzeichnet, dass**
der Schleifringübertrager sendeseitig mit einer Signalverstärkungseinrichtung (24a) und empfangsseitig mit einer Signalauswerteeinrichtung (26b) ausgestattet ist, wobei die Signalverstärkungseinrichtung (24a) dazu ausgebildet ist, Spannungswerte von anliegenden Signalen für eine Übertragung über den Schleifringübertrager zu verstärken und die Signalauswerteeinrichtung (26b) dazu ausgebildet ist, über den Schleifringübertrager empfangene Signale auf einen dem Datenprotokoll entsprechenden Wert zu setzen, wobei die Signalauswerteeinrichtung (26b) die Größe der Spannungsdifferenzen auswertet und bei Spannungsdifferenzen unterhalb einer vorbestimmten Minimaldifferenz einen von mehreren möglichen Zuständen des Schleifringübertragers signalisiert.

2. Windenergieanlage nach Anspruch 1, **dadurch gekennzeichnet, dass** als Datenprotokoll ein Feldbus-Protokoll, insbesondere ein Interbus-Protokoll vorgesehen ist, bei dem Spannungsdifferenzen ausgewertet werden.

3. Windenergieanlage nach Anspruch 1 oder 2, **dadurch gekennzeichnet, dass** die Signalverstärkungseinrichtung (24a) anliegende Spannungsdifferenzen verstärkt.

4. Windenergieanlage nach Anspruch 3, **dadurch gekennzeichnet, dass** die verstärkten Spannungsdifferenzen in einem Intervall mit einem minimalen Spannungswert und einem maximalen Spannungswert liegen, wobei der minimale Spannungswert und der maximale Spannungswert eine entgegengesetzte Polarität aufweisen.

5. Windenergieanlage nach einem der Ansprüche 1 bis 4, **dadurch gekennzeichnet, dass** die Signalauswerteeinrichtung (26b) anliegende Signale in ein durch das Datenprotokoll vorgegebenes Intervall umsetzt.

6. Windenergieanlage nach Anspruch 5, **dadurch gekennzeichnet, dass** das durch das Datenprotokoll vorgegebene Intervall einen minimalen Spannungswert und einen maximalen Spannungswert mit gleicher Polarität aufweist.

7. Windenergieanlage nach einem der Ansprüche 1 bis 6, **dadurch gekennzeichnet, dass** eine erste Baugruppe (24) vorgesehen ist, die eine Signalverstärkungseinrichtung (24a) und eine Signalauswerteeinrichtung (24b) aufweist.

8. Windenergieanlage nach Anspruch 7, **dadurch gekennzeichnet, dass** eine zweite Baugruppe (26) vorgesehen ist, die eine Signalverstärkungseinrichtung (26a) und eine Signalauswerteeinrichtung (26b) aufweist.

9. Windenergieanlage nach Anspruch 7 oder 8, **dadurch gekennzeichnet, dass** die Signalverstärkungseinrichtung (24a) der ersten Baugruppe (24) in Verbindung mit der Signalauswerteeinrichtung (26b) der zweiten Baugruppe (26) steht.

10. Windenergieanlage nach Anspruch 9, **dadurch gekennzeichnet, dass** die Signalauswerteeinrichtung (24b) der ersten Baugruppe (24) in Verbindung mit der Signalverstärkungseinrichtung (26a) der zweiten Baugruppe (26) steht.

## Claims

1. A wind turbine with a slip ring transmitter between a rotor hub (14) and a nacelle (12) for transmitting electrical signals with a data protocol
**characterized in that**
the slip ring transmitter is equipped on the transmission side with a signal amplifying apparatus (24a) and on the reception side with a signal evaluating apparatus (26b), wherein the signal amplifying apparatus (24a) is designed to amplify voltage values of applied signals for transmission via the slip ring transmitter, and the signal evaluating apparatus (26b) is designed to set signals received via the slip ring transmitter to a value corresponding to the data protocol, wherein the signal evaluating apparatus (26b) evaluates the size of the voltage differences and signals one of a plurality of possible states of the slip ring transmitter in the event of voltage differences below a predetermined minimum difference.

2. The wind turbine according to claim 1, **characterized in that** a fieldbus protocol, in particular an inter-bus protocol, is provided as the data protocol with which voltage differences are evaluated.

3. The wind turbine according to claim 1 or 2, **characterized in that** the signal amplifying apparatus (24a) amplifies applied voltage differences.

4. The wind turbine according to claim 3, **characterized in that** the amplified voltage differences lie within an interval with a minimum voltage value and a maximum voltage value, wherein the minimum voltage value and the maximum voltage value have an opposite polarity.

5. The wind turbine according to one of claims 1 to 4, **characterized in that** the signal evaluating apparatus (26b) converts applied signals into an interval specified by the data protocol.

6. The wind turbine according to claim 5, **characterized in that** the interval specified by the data protocol has a minimum voltage value and a maximum voltage value with the same polarity.

7. The wind turbine according to one of claims 1 to 6, **characterized in that** a first assembly (24) is provided that has a signal amplifying apparatus (24a) and a signal evaluating apparatus (24b).

8. The wind turbine according to claim 7, **characterized in that** a second assembly (26) is provided that has a signal amplifying apparatus (26a) and a signal evaluating apparatus (26b).

9. The wind turbine according to claim 7 or 8, **characterized in that** the signal amplifying apparatus (24a) of the first assembly (24) is connected to the signal evaluating apparatus (26b) of the second assembly (26).

10. The wind turbine according to claim 9, **characterized in that** the signal evaluating apparatus (24b) of the first assembly (24) is connected to the signal amplifying apparatus (26a) of the second assembly (26).

## Revendications

1. Éolienne dotée d'un élément de transmission à bague collectrice entre un moyeu de rotor (14) et une nacelle (12) pour transmettre des signaux électriques avec un protocole de données,
**caractérisée en ce que**
l'élément de transmission à bague collectrice est équipé d'un dispositif d'amplification des signaux (24a) du côté de l'émission et d'un dispositif d'évaluation des signaux (26b) du côté de la réception, dans laquelle le dispositif d'amplification des signaux (24a) est conçu pour amplifier des valeurs de tension de signaux appliqués en vue d'une transmission via l'élément de transmission à bague collectrice et le dispositif d'évaluation des signaux (26b) est conçu pour régler des signaux reçus via l'élément de transmission à bague collectrice sur une valeur correspondant au protocole de données, dans laquelle le dispositif d'évaluation de signaux (26b) évalue l'amplitude des différences de tension et signale l'un parmi plusieurs états possibles de l'élément de transmission à bague collectrice lorsque les différences de tension sont inférieures à une différence minimale prédéterminée.

2. Éolienne selon la revendication 1, **caractérisée en ce qu'**un protocole de bus de terrain, notamment un protocole Interbus, est prévu comme protocole de données, dans lequel des différences de tension sont évaluées.

3. Éolienne selon la revendication 1 ou 2, **caractérisée en ce que** le dispositif d'amplification des signaux (24a) amplifie des différences de tension présentes.

4. Éolienne selon la revendication 3, **caractérisée en ce que** les différences de tension amplifiées se situent dans un intervalle avec une valeur de tension minimale et une valeur de tension maximale, dans laquelle la valeur de tension minimale et la valeur de tension maximale présentent une polarité opposée.

5. Éolienne selon l'une des revendications 1 à 4, **caractérisée en ce que** le dispositif d'évaluation des signaux (26b) convertit les signaux présents en un intervalle prédéfini par le protocole de données.

6. Éolienne selon la revendication 5, **caractérisée en ce que** l'intervalle prédéfini par le protocole de données présente une valeur de tension minimale et une valeur de tension maximale d'une même polarité.

7. Éolienne selon l'une des revendications 1 à 6, **caractérisée en ce qu'**un premier groupe d'assemblage (24) est prévu, qui présente un dispositif d'amplification des signaux (24a) et un dispositif d'évaluation des signaux (24b).

8. Éolienne selon la revendication 7, **caractérisée en ce qu'**un second groupe d'assemblage (26) est prévu, qui présente un dispositif d'amplification des signaux (26a) et un dispositif d'évaluation des signaux (26b).

9. Éolienne selon la revendication 7 ou 8, **caractérisée en ce que** le dispositif d'amplification des signaux (24a) du premier groupe d'assemblage (24) est associé au dispositif d'évaluation des signaux (26b) du second groupe d'assemblage (26).

10. Éolienne selon la revendication 9, **caractérisée en ce que** le dispositif d'évaluation des signaux (24b) du premier groupe d'assemblage (24) est associé au dispositif d'amplification des signaux (26a) du second groupe d'assemblage (26).
